# EUROPÄISCHE PATENTANMELDUNG

(11) **EP 2 957 528 A1**
(43) Veröffentlichungstag der Anmeldung: **23.12.2015**
(21) Anmeldenummer: 15001749.9
(22) Anmeldetag: 15.06.2015
(51) Int. Cl.: B65G 11/16

(54) **VERSCHLEISSSCHUTZEINHEIT**

(30) Priorität: 19.06.2014 DE 202014004909 U
(71) Anmelder: Fritz, Norbert, 06118 Halle (DE)
(72) Erfinder: Fritz, Norbert, 06118 Halle (DE)
(74) Vertreter: Weihrauch, Frank

(57) **Zusammenfassung**

Die Erfindung betrifft eine Verschleißschutzeinheit, aufweisend ein Trägerelement (1) mit einem Aufnahmebereich (2), und aufweisend Befestigungselemente (3), welche dem Trägerelement (1) auf einer, dem Aufnahmebereich (2) gegenüberliegenden, Seite zugeordnet sind und mittels derer die Verschleißeinheit an einer Unterstruktur anordenbar ist, und aufweisend eine Mehrzahl Verschleißschutzelemente (4), welche in dem Aufnahmebereich (2) angeordnet sind und welche mindestens eine Verschleißschutzebene ausbilden, und aufweisend eine Vergussmasse (5), welche in dem Aufnahmebereich (2) angeordnet ist und mittels derer die Verschleißelemente (4) in dem Aufnahmebereich (2) fixiert und mit dem Trägerelement (1) verbunden sind und wobei die Vergussmasse (5) das Trägerelement (1) zumindest abschnittsweise umschließt.

## Beschreibung

Die Erfindung betrifft eine Verschleißschutzeinheit, insbesondere als auswechselbare Verschleißschutzeinheit für Förderanlagen.

Der vorliegenden Erfindung liegt das generelle Problem zugrunde, dass bei Förderanlagen, beispielsweise in der Bergbauindustrie, in der Regel ein großer Verschleiß der durch das geförderte Material abrasiv belasteten Förderelemente auftritt.

Um diesen Verschleiß zu minimieren sind aus dem Stand der Technik bereits unterschiedliche Lösungen bekannt.

In diesem Zusammenhang werden beispielsweise Förderanlagen in den Bereichen, in welchen diese mit dem abrasiven Material in Kontakt gelangen, mit Verschleißschutzelementen versehen.

Derartige Verschleißschutzelemente werden zum Beispiel durch plattenförmige Elemente aus einem verschleißfesten Material, beispielsweise Keramik, gebildet, welche an den zu schützenden Oberflächen der Förderelemente angeordnet werden.

Der Nachteil derartiger Verschleißschutzelemente besteht insbesondere darin, dass diese in der Regel großflächig und einstückig ausgebildet sind und dass eine lokale Beschädigung eines solchen Verschleißschutzelements in der Regel zu dessen strukturellem Versagen führt, wodurch in einem entsprechend großen Bereich des jeweiligen Förderelements die Verschleißschutzfunktion nicht mehr gewährleistet werden kann.

Um diesem Nachteil zu begegnen sind aus dem Stand der Technik ebenfalls Lösungen bekannt, welche Verschleißschutzvorrichtungen vorsehen, die aus einer Mehrzahl kleinstückiger, in der Regel nebeneinanderliegender und/oder sich zumindest teilweise überlappender, Verschleißschutzelemente gebildet werden, wobei in der Regel jedes Verschleißschutzelement für sich mit der Förderanlage verbunden werden muss.

Derartige Lösungen führen zwar dazu, dass bei einer Beschädigung eines Verschleißschutzelements die Verschleißschutzfunktion nur in einem vergleichsweise kleinen Bereich des Förderelements nicht mehr gewährleistet werden kann; jedoch ergibt sich hierbei im Besonderen der Nachteil, dass die Montage der einzelnen Verschleißschutzelemente einen erheblichen Zeitaufwand bedingt.

Die Aufgabe der vorliegenden Erfindung besteht darin, eine leistungsfähigen Verschleißschutz, insbesondere für Förderelemente, bereitzustellen, welcher kostengünstig herstell- und montierbar ist und welcher eine einfache Auswechselbarkeit sowie eine hohe Verschleißfestigkeit bietet.

Die Aufgabe wird durch eine Verschleißschutzeinheit mit den, im Patentanspruch 1 aufgeführten, Merkmalen gelöst. Bevorzugte Weiterbildungen ergeben sich aus den Unteransprüchen.

Eine erfindungsgemäße Verschleißschutzeinheit weist ein Trägerelement mit einem Aufnahmebereich sowie Befestigungselemente auf, wobei die Befestigungselemente dem Trägerelement auf einer, dem Aufnahmebereich gegenüberliegenden, Seite zugeordnet sind und wobei mittels der Befestigungselemente die Verschleißschutzeinheit an einer Unterstruktur anordenbar ist. Die Unterstruktur wird in diesem Zusammenhang durch ein zu schützendes Objekt gebildet, auf welchem die Verschleißschutzeinheit einzeln oder innerhalb eines Verbundes mit weiteren Verschleißschutzeinheiten befestigt wird. Die Befestigungselemente können vorliegend beispielsweise als Gewindebolzen ausgebildet sein, welche in entsprechende Aufnahmebohrungen der Unterstruktur eingeführt und in diesen durch Muttern gesichert werden. Als Befestigungselemente im Sinne der erfindungsgemäßen Lösung ist jedes Mittel zu verstehen, welches in der Lage ist, die Verschleißschutzeinheit an der Unterstruktur zu befestigen. Es ist auch möglich, dass das Trägerelement und die Befestigungelemente ein einheitliches Bauteil bilden.

Die Verschleißschutzeinheit weist erfindungsgemäß ferner eine Mehrzahl Verschleißschutzelemente auf, welche in dem Aufnahmebereich angeordnet sind. Die Verschleißschutzelemente sind vorliegend vorzugsweise als kleinstückige und insbesondere plattenförmige Elemente ausgebildet und bestehen beispielsweise aus Keramik, Gummi, Polyurethan oder Stahl. Vorzugsweise bestehen die Verschleißschutzelemente aus Keramik- oder Keramikverbundmaterial, welches insbesondere eine besonders hohe abrasive Verschleißfestigkeit bei gleichzeitig geringem Gewicht bietet.

Die Anordnung der Verschleißschutzelemente in dem Aufnahmebereich erfolgt erfindungsgemäß derart, dass diese in der Verschleißschutzeinheit mindestens eine Verschleißschutzebene ausbilden. Als Verschleißschutzebene wird vorliegend der gesamte Bereich bezeichnet, welcher durch die nebeneinander angeordneten Verschleißschutzelemente einbeschrieben wird.

Des Weiteren weist die erfindungsgemäße Verschleißschutzeinheit eine Vergussmasse auf, welche ebenfalls in dem Aufnahmebereich angeordnet ist und mittels derer die Verschleißelemente in dem Aufnahmebereich fixiert und mit dem Trägerelement verbunden sind.

Die Bereitstellung der Verschleißschutzeinheit erfolgt hierbei derart, dass die Verschleißschutzelemente in dem Aufnahmebereich vorpositioniert werden und anschließend die Vergussmasse in den Aufnahmebereich eingebracht wird. Die Vergussmasse umschließt dabei die Verschleißschutzelemente an deren Bodenseite und optional an den Seitenflächen, während die Expositionsseite, also die, der Unterkonstruktion abgewandte Seite der Verschleißschutzelemente, nicht notwendig von der Vergussmasse umschlossen wird.

Nach dem Aushärten der Vergussmasse liegen die Verschleißschutzelemente in einem geschlossenen Verbund vor, welcher mit dem Trägerelement fest verbunden ist. Je nach Ausbildung liegt ein Stoffschluss oder ein Stoff- und Formschluss vor. Innerhalb des Verbundes sind die Verschleißschutzelemente insbesondere aneinander angrenzend angeordnet, sodass sich benachbarte Verschleißschutzelemente gegenseitig stützen und so insbesondere die Gesamtstabilität des Verbundes erhöht wird. Dabei können die Verschließschutzelemente entweder unmittelbar aneinander angrenzen oder einen Zwischenraum aufweisen, der mit der Vergussmasse ausgefüllt ist.

Das Trägerelement gewährleistet die Formstabilität der Verschleißschutzeinheit. Es ist erfindungsgemäß ganz oder abschnittsweise in die Vergussmasse eingebettet und zudem, insbesondere bei gitterartiger oder lochblechartiger Ausbildung, von der Vergussmasse durchsetzt. Die Einbettung des Trägerelements in die Vergussmasse bietet den besonderen Vorteil, dass ein besonders zuverlässiger Verbund aus Verschleißelementen und Trägerelement vorliegt. Der Verbund wird hierbei insbesondere dadurch optimiert, dass das Trägerelement fomschlüssig in die Vergussmasse eingebettet ist. Als besonderer Vorteil müssen die bei der Benutzung einwirkenden Kräfte sowohl im Hinblick auf Abzugskräfte als auch durch Scherbelastungen also nicht oder nicht ausschließlich durch einen Haftverbund zwischen der Vergussmasse und dem Trägerelement auf das Trägerelement übertragen werden.

Als weiterer Vorteil wird das Trägerelement auch an der der Unterstrukur zugewandten Seite durch die Vergussmasse vor korrosiven und chemischen Angriffen geschützt. Zudem kann je nach Elastizität der Vergussmasse die Verschleißschutzeinheit aufgrund des Vergussmassebereichs, der sich zwischen dem Trägerelement und der Unterstruktur befindet, Kräfte eines Impaktereignisses besser aufnehmen, verteilen und in die Unterstruktur ableiten.

Die erfindungsgemäße Verschleißschutzeinheit kombiniert auf besonders vorteilhafte Weise eine einfache Montierbarkeit mit den Vorteilen kleinsegmentierter Verschleißschutzvorrichtungen hinsichtlich deren Beschädigungs- und Ausfallverhaltens. Insbesondere kann durch die Kleinsegmentierung die Wahrscheinlichkeit eines Bruchs eines Verschleißschutzelements bei einem Impaktereignis reduziert werden.

Ferner besteht der Vorteil, dass bei einer etwaigen Beschädigung eines Verschleißschutzelements die generelle Verschleißschutzfunktion der Verschleißschutzeinheit nur in einem vergleichsweise kleinen Bereich beeinträchtigt wird. Gleichzeitig kann mit nur einer Verschleißschutzeinheit eine relativ große Fläche abgedeckt werden, womit zusätzliche Montagevorteile bestehen.

Ferner werden durch die bereits an der Verschleißschutzeinheit vorgesehenen Befestigungsmittel eine besonders einfache und mit einem geringen Zeitaufwand versehene Art der Montage an der jeweiligen Unterkonstuktion sowie eine unkomplizierte Auswechselbarkeit der Verschleißschutzeinheit ermöglicht.

Ein weiterer Vorteil der Verschleißschutzeinheit besteht vorliegend darin, dass diese vorgefertig werden kann und zudem, durch eine geeignete Anordnung der Verschleißschutzelemente und eine entsprechend geometrischen Ausbildung des Trägerelements, die Verschleißschutzeinheit an unterschiedliche Geometrien der zu schützenden Unterkonstuktion angepasst werden kann.

Ein weiterer Vorteil besteht darin, dass mittels der Vergussmasse unproblematisch ein gewünschter Elastizitätsgrad eingestellt werden kann, so dass eine Verteilung und ein Abbau von Kräften bei Impaktereignissen gemäß den konkreten Nutzungsanforderungen optimal eingestellt werden kann.

Eine erfindungsgemäße Verschleißschutzeinheit eignet sich insbesondere für die Verwendung in Trichtern, Schurren und Übergabestationen in der Fördertechnik.

Eine besonders vorteilhafte Weiterbildung der erfindungsgemäßen Verschleißschutzeinheit sieht vor, dass die Verschleißschutzelemente derart in dem Aufnahmebereich angeordnet sind, dass diese mehrere, übereinanderliegende Verschleißschutzebenen ausbilden.

Auf diese Weise können insbesondere die Widerstandsfähigkeit und die Langzeitverwendbarkeit der Verschleißschutzeinheit verbessert werden.

Die Verschleißschutzelemente können in diesem Fall in jeder Verschleißschutzebene identisch ausgebildet sein oder je nach Verschleißschutzebene unterschiedliche Geometrien aufweisen.

Die Verschleißschutzelemente der übereinanderliegenden Verschleißschutzebenen sind in einer vorteilhaften Variante der Erfindung deckungsgleich ausgebildet.

Eine solche Ausbildung der Verschleißschutzelemente ermöglicht als besonderen Vorteil, dass die Vergussmasse sehr gut in die Hohlräume zwischen den Verschleißschutzelementen eingebracht werden und so ein besonders stabiler Verbund der Verschleißschutzelemente bereitgestellt werden kann.

Eine weitere vorteilhafte Ausbildung der erfindungsgemäßen Verschleißschutzeinheit sieht ferner vor, dass in dem Aufnahmebereich zusätzlich farbige Markierungselemente angeordnet sind.

Die Markierungselemente sind vozugsweise mit einer Signalfarbe versehen und bilden innerhalb der Verschleißschutzeinheit mindestens eine Markierungsebene, welche vorliegend von mindestens einer Verschleißschutzebene überdeckt wird. Die Markierungselemente können beispielsweise als durchgefärbte Kunststoffkörper ausgebildet sein. Zudem kann die Geometrie der Markierungselemente insbesondere der Geometrie der Verschleißschutzelemente entsprechen. Die Markierungsebene muss dabei nicht ausschließlich durch Markierungselemente gebildet werden. Vielmehr können in der Markierungsebene auch Verschleißschutzelemente angeordnet sein, so dass beispielsweise nur an jeder fünften Position ein Markierungselment angeordnet ist.

Durch die Anordnung der Markierungselemente wird als besonderer technologischer Vorteil auf kostengünstige Art und Weise einen Indikator für die Abnutzung der Verschleißeinheit gebildet, indem, bei einem vollständigen Verschleiß oder einer Beschädigung eines oder mehrerer Verschleißschutzelemente, das jeweilige Markierungselement sichtbar wird und so die Notwendigkeit eines Tauschs der Verschleißschutzeinheit signalisiert wird.

Die Markierungselemente sind gemäß einer weiteren vorteilhaften Variante der Verschleißschutzeinheit als Verschleißschutzelemente ausgebildet und vorzugsweise so in dem Aufnahmebereich angeordnet, dass diese ebenfalls eine Verschleißschutzebene ausbilden.

Durch die Ausbildung der Markierungselemente als Verschleißschutzelemente kann zum einen die Langzeitverwendbarkeit der Verschleißschutzeinheit zusätzlich erhöht werden.

Zum anderen ermöglicht die vorliegende Variante einen mehrstufigen Aufbau mehrerer, übereinanderliegender Markierungsebenen. In einem solchen Fall können beispielsweise zwei Markierungsebenen als Verschleißschutzebenen übereinanderliegen, wobei die obenliegende Markierungsebene durch grün eingefärbte Markierungselemente und die darunterliegende Markierungsebene durch rot eingefärbte Markierungselemente gebildet werden.

Eine solche Ausführungsform der Markierungsebenen ermöglicht insbesondere eine bessere Abschätzung der Abnutzung der Verschleißschutzeinheit und eine dementsprechend bessere Planbarkeit eines notwendig werdenden Austauschs.

Zudem ist es bei der hier beschriebenen Variante der Verschleißschutzeinheit möglich, nur einen Teil der Markierungselemente innerhalb der jeweiligen Markierungsebene einzufärben, sodass sich beispielsweise eine linienförmige Anordnung der eingefärbten Markierungselemente ergibt. Die übrigen, nicht eingefärbten Markierungselemente fungieren in diesem Fall als normale Verschleißschutzelemente.

Eine solche Ausführung bietet insbesondere den Vorteil, dass nicht zwingend jedes Markierungselement eingefärbt ist und somit die Kosten für die benötigten Markierungselemente niedrig gehalten werden können.

Die Erfindung wird als Ausführungsbeispiel anhand von
- Fig. 1: Seitenansicht geschnitten mit beabstandeten Verschleißschutzelementen
- Fig. 2: Seitenansicht geschnitten mit Verschleißschutzelementen und Markierungselementen
- Fig. 3: Seitenansicht geschnitten mit zwei Verschleißschutzebenen
- Fig. 4: Seitenansicht geschnitten mit aneinandergrenzenden Verschleißschutzelementen
näher erläutert.

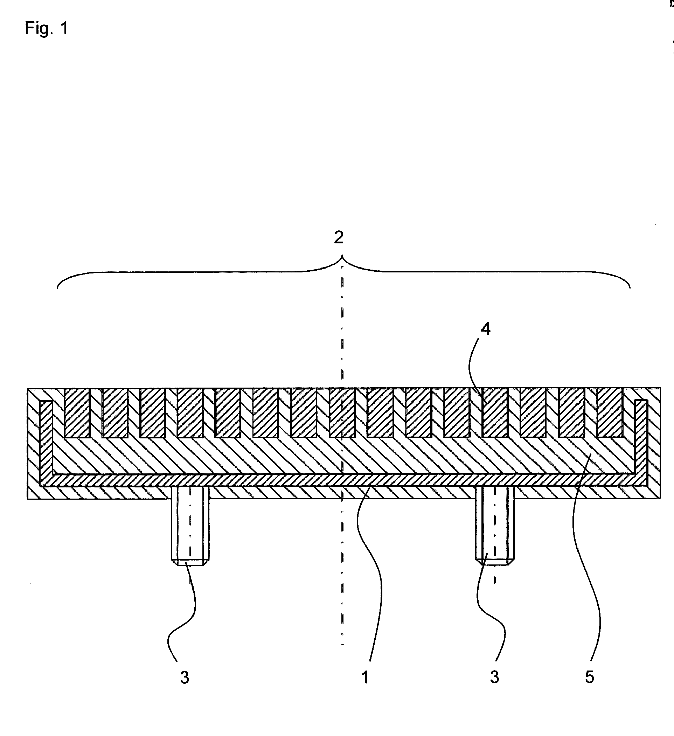

Fig. 1 zeigt eine erfindungsgemäße Verschleißschutzeinheit, aufweisend ein Trägerelement 1 mit einem Aufnahmebereich 2 sowie aufweisend zwei Befestigungselemente 3, welche an dem Trägerelement 1 auf der, dem Aufnahmebereich 2 gegenüberliegenden, Seite angeordnet und mit diesem verschweißt sind.

Mittels der Befestigungselemente 3 ist die Verschleißschutzeinheit an einer Unterkonstruktion (nicht dargestellt) befestigbar, wobei die Unterkonstruktion in diesem Fall ein zu schützendes Objekt, beispielsweise einen Trichter oder eine Schurre einer Förderanlage darstellt.

Im vorliegenden Ausführungsbeispiel sind die Befestigungselemente 3 als Gewindebolzen ausgebildet.

Die Verschleißschutzeinheit weist, wie in den Figuren dargestellt, ferner eine Mehrzahl Verschleißschutzelemente 4 auf, welche in dem Aufnahmebereich 2 angeordnet sind.

Die Verschleißschutzelemente 4 bestehen in dem Ausführungsbeispiel aus Keramikmaterial und werden erfindungsgemäß mittels einer Vergussmasse 5, welche ebenfalls in dem Aufnahmebereich 2 angeordnet ist, fixiert und mit dem Trägerelement 1 verbunden.

Die Vergussmasse 5 besteht im Ausführungsbeispiel aus Polyurethan und wird nach einer Vorpositionierung der Verschleißschutzelemente 4 in dem Aufnahmebereich 2 in diesen eingefüllt, wobei die Vergussmasse 5 erfindungsgemäß sowohl die Verschleißschutzelemente 4 an deren Unterseiten und Seitenflächen, als auch das Trägerelement 1 umschließt.

Nach dem Aushärten der Vergussmasse 5 liegt ein stabiler Verbund der Verschleißschutzelemente 4 mit dem Trägerelement 1 vor, wobei insbesondere das Trägerelement 1 zugleich formschlüssig in die Vergussmasse 5 eingebettet ist.

Die Anordnung der Verschleißschutzelemente 4 erfolgt erfindungsgemäß derart, dass diese eine Verschleißschutzebene ausbilden.

In dem Ausführungsbeispiel nach Fig. 1 sind die Verschleißschutzelemente 4 beabstandet voneinander in dem Aufnahmebereich 2 angeordnet und bilden mit der Vergussmasse 5 in den Zwischenräumen zwischen benachbarten Verschleißschutzelementen 4 die Verschleißschutzebene.

Durch die Beabstandung der Verschleißschutzelemente 4 voneinander wird es ermöglicht, dass jedes Verschleißschutzelement 4 für sich genommen von der Vergussmasse 5 umschließbar ist wodurch eine elastische, wechselseitige seitliche Abstützung möglich ist. Auf diese Weise kann kann zudem, auch bei einem Totalversagen eines oder mehrerer einzelner Verschleißschutzelemente 4, die Funktionsfähigkeit des übrigen Verbundes aufrechterhalten werden.

In der Ausführungsform der Verschleißschutzeinheit gemäß Fig. 1, weisen die Verschleißschutzelemente 4 eine größere Höhe als Breite auf.

Durch das vorliegende Höhen-Breiten-Verhältnis der Verschleißschutzelemente 4 kann die Lebensdauer der Verschleißschutzeinheit erhöht werden, da die Verschleißschutzelemente 4 längere Zeit einer Abrasivbelastung standhalten.

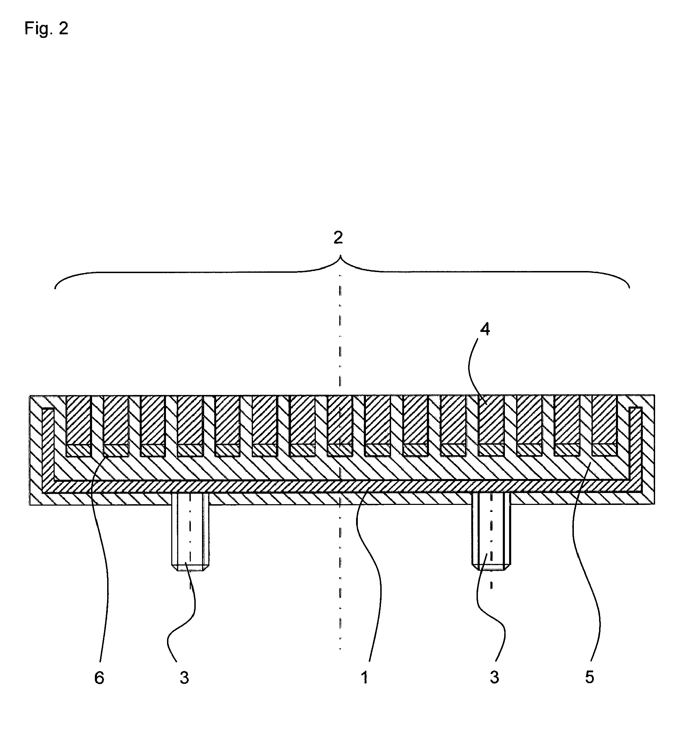

Ein weiteres Ausführungsbeispiel der Verschleißschutzeinheit ist in Fig. 2 dargestellt.

In diesem Ausführungsbeispiel sind unterhalb der Verschleißschutzelemente 4 zusätzlich farbige Markierungselemente 6 angeordnet, welche ihrerseits eine Markierungsebene ausbilden.

Die Markierungselemente 6 dienen vorliegend dazu, einen definierbaren Abnutzungsgrad der Verschleißschutzelemente 4 oder eventuell beschädigte Verschleißschutzelemente 4 zu signalisieren.

Die Signalisierung erfolgt hierbei durch zumindest abschnittsweises Freilegen der Markierungselemente und ermöglicht, beispielsweise im Rahmen einer optischen Kontrolle der Verschleißschutzeinheit, eine besonders einfache Erkennung des Verschleißgrades oder von Beschädigungen der Verschleißschutzelemente 4.

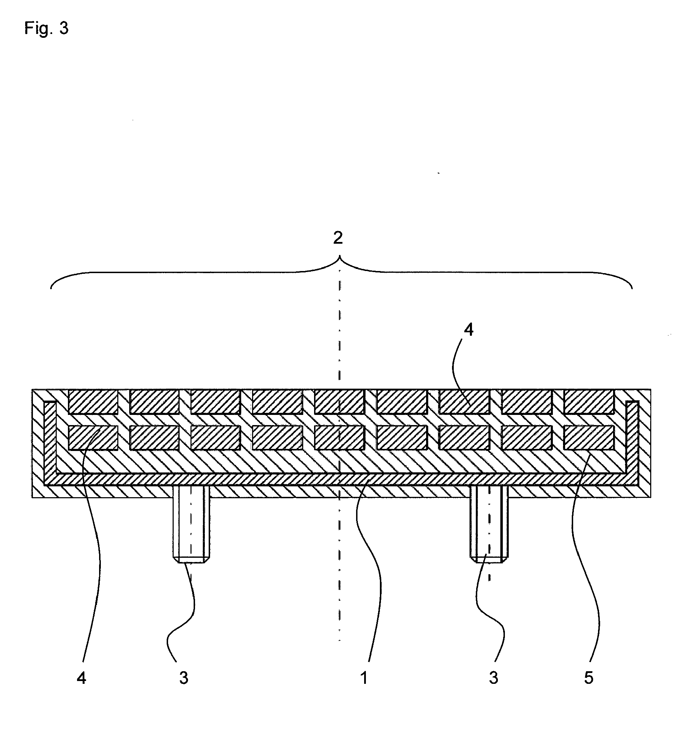

Fig. 3 zeigt eine weitere Ausführungsvariante der erfindungsgemäßen Verschleißschutzeinheit, bei welcher die Verschleißschutzelemente 4 derart in dem Aufnahmebereich 2 angeordnet sind, dass diese zwei übereinanderliegende Verschleißschutzebenen ausbilden.

Die Verschleißschutzelemente 4 der übereinanderliegenden Verschleißschutzebenen sind vorliegend deckungsgleich ausgebildet, wodurch als Vorteil eine besonders gute Umschließung der Verschleißschutzelemente 4 durch die Vergussmasse 5 bereitgestellt werden kann, da diese insbesondere in die Zwischenräume zwischen den Verschleißschutzelementen 4 eingebracht werden kann.

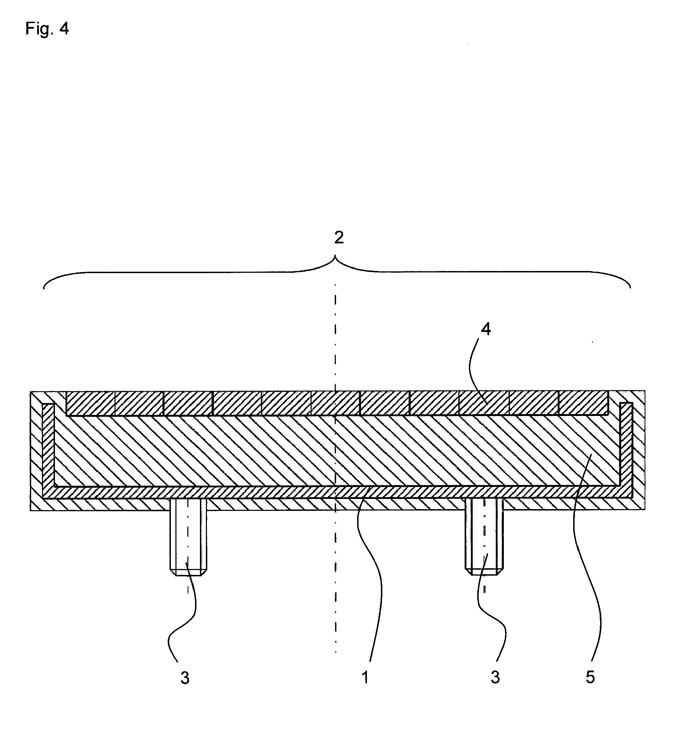

Fig. 4 zeigt ein weiteres Ausführungsbeispiel der Verschleißschutzeinheit, bei welchem die Verschleißschutzelemente unmittelbar aneinandergrenzend angeordnet sind.

Eine solche Anordnung der Verschleißschutzelemente 4 ermöglicht zum einen eine Bereitstellung einer einheitlichen Verschleißschutzebene und zum anderen eine gegenseitige Abstützung benachbarter Verschleißschutzelemente 4, wodurch insbesondere eine Vorpositionierung der Verschleißschutzelemente 4 vor dem Einbringen der Vergussmasse 5 erleichtert und optimiert werden kann.

### Verwendete Bezugszeichen

- 1: Trägerelement
- 2: Aufnahmebereich
- 3: Befestigungselemente
- 4: Verschleißschutzelemente
- 5: Vergussmasse
- 6: Markierungselemente

## Patentansprüche

1. Verschleißschutzeinheit,
aufweisend ein Trägerelement (1) mit einem Aufnahmebereich (2), und aufweisend Befestigungselemente (3), welche dem Trägerelement (1) auf einer, dem Aufnahmebereich (2) gegenüberliegenden, Seite zugeordnet sind und mittels derer die Verschleißeinheit an einer Unterstruktur anordenbar ist, und aufweisend eine Mehrzahl Verschleißschutzelemente (4), welche in dem Aufnahmebereich (2) angeordnet sind und welche mindestens eine Verschleißschutzebene ausbilden, und aufweisend eine Vergussmasse (5), welche in dem Aufnahmebereich (2) angeordnet ist und mittels derer die Verschleißelemente (4) in dem Aufnahmebereich (2) fixiert und mit dem Trägerelement (1) verbunden sind und wobei die Vergussmasse (5) das Trägerelement (1) zumindest abschnittsweise umschließt.

2. Verschleißschutzeinheit nach Anspruch 1,
wobei die Verschleißschutzelemente (4) mehrere, übereinanderliegende Verschleißschutzebenen ausbilden.

3. Verschleißschutzeinheit nach Anspruch 2,
wobei die Verschleißschutzelemente (4) der übereinanderliegenden Verschleißschutzebene deckungsgleich zueinander angeordnet sind.

4. Verschleißschutzeinheit nach einem der vorhergehenden Ansprüche,
wobei die Verschleißschutzeinheit eine Mehrzahl farbiger Markierungselemente (6) aufweist, wobei die Markierungselemente in dem Aufnahmebereich (2) angeordnet sind und mindestens eine Markierungsebene ausbilden und wobei die Markierungselemente von mindestens einer Verschleißschutzebene überdeckt werden.

5. Verschleißschutzeinheit nach Anspruch 4,
wobei die Markierungselemente (6) als Verschleißschutzelemente ausgebildet sind.
